(19) Europäisches Patentamt
European Patent Office
Office européen des brevets

(11) **EP 3 185 161 A1**

(12) **DEMANDE DE BREVET EUROPEEN**

(43) Date de publication:
**28.06.2017 Bulletin 2017/26**

(51) Int Cl.:
*G06F 21/32* [(2013.01)] *H04L 29/06* [(2006.01)]

(21) Numéro de dépôt: **15307112.1**

(22) Date de dépôt: **22.12.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(71) Demandeur: **GEMALTO SA**
**92190 Meudon (FR)**

(72) Inventeurs:
• **HUGOT, Didier**
**13881 Gemenos cedex (FR)**
• **FAURE, Frédéric**
**13881 Gemenos cedex (FR)**

(54) **DISPOSITIF DE GÉNÉRATION D'UNE CARACTÉRISTIQUE BIOMÉTRIQUE DÉFORMÉE D'UN UTILISATEUR**

(57)    L'invention concerne un dispositif 10 de génération d'une caractéristique biométrique déformée E' d'un utilisateur 12, le dispositif 10 comprenant un capteur d'une caractéristique biométrique E de l'utilisateur 12, le dispositif 10 comprenant :

- un moyen de combinaison 17 de la caractéristique biométrique E de l'utilisateur 12 avec une constante C, le moyen de combinaison 17 étant destiné à fournir la caractéristique biométrique déformée E' de l'utilisateur 12 à un moyen de comparaison de la caractéristique biométrique déformée E' avec une caractéristique biométrique de référence, la caractéristique biométrique de référence étant obtenue lors d'une phase préalable d'enregistrement auprès d'un élément 20 requérant une authentification de l'utilisateur 12 ;

- des moyens de stockage de la constante C.

Fig. 1

## Description

Le domaine de l'invention est celui de l'authentification d'un utilisateur auprès d'un terminal à l'aide d'une de ses caractéristiques biométriques.

Plus précisément, l'invention concerne un dispositif de génération d'une caractéristique biométrique déformée d'un utilisateur, le dispositif comprenant un capteur d'une caractéristique biométrique de l'utilisateur.

La biométrie est aujourd'hui de plus ou plus utilisée pour apporter de la sécurité en plus de la commodité pour accéder à des services sécurisés.

À titre d'exemple, les paiements à l'aide de terminaux mobiles comptent maintenant sur l'authentification d'empreinte digitale pour sécuriser des transactions de paiement avec une expérience utilisateur homogène plus rapidement et plus commode que l'entrée d'un code PIN.

De manière connue, les principaux problèmes liés avec l'utilisation de la biométrie sont :

- L'unicité : des caractéristiques biométriques sont uniques et ne peuvent pas être remplacées (un utilisateur dispose au mieux de seulement 10 empreintes digitales, de 2 yeux,...). Ainsi un problème se pose si une de ces caractéristiques biométrique est compromise.

La garantie de caractéristiques biométriques est alors critique.

- Vie privée : une caractéristique biométrique identifie uniquement une personne et est liée à son identité. Donc si quelqu'un utilise son empreinte digitale pour ouvrir son dispositif, pour l'accès physique et d'autres buts (effectuer un paiement par exemple), il se pose la question de savoir comment protéger sa vie privée.

L'invention décrite dans ce document a l'intention de proposer une solution technique remédiant à ces deux problèmes.

Pour adresser la problématique d'unicité de caractéristiques biométriques décrite précédemment, l'invention proposée consiste dans la traduction des caractéristiques biométriques originales dans des caractéristiques biométriques révocables, par la suite appelées caractéristiques biométriques déformées.

A ce titre, la présente invention propose un dispositif de génération d'une caractéristique biométrique déformée d'un utilisateur, ce dispositif comprenant un capteur d'une caractéristique biométrique de l'utilisateur, le dispositif comprenant :

- un moyen de combinaison de la caractéristique biométrique de l'utilisateur avec une constante, le moyen de combinaison étant destiné à fournir la caractéristique biométrique déformée de l'utilisateur à un moyen de comparaison de la caractéristique biométrique déformée avec une caractéristique biométrique de référence, la caractéristique biométrique de référence étant obtenue lors d'une phase préalable d'enregistrement auprès d'un élément requérant une authentification de l'utilisateur ;
- des moyens de stockage de cette constante.

Le dispositif selon l'invention est un dispositif placé entre l'utilisateur et le lecteur biométrique de l'élément requérant une authentification de l'utilisateur. Cet élément est typiquement une tablette, un téléphone portable ou un ordinateur.

Préférentiellement, la caractéristique biométrique déformée est affichée sur un écran du dispositif.

Avantageusement, le dispositif selon l'invention est constitué par un dé (de type dé à coudre) dans lequel l'utilisateur peut y glisser un doigt.

Dans un autre mode de réalisation, le dispositif est constitué par une paire de lunettes destinée à être portée par l'utilisateur.

Préférentiellement, le dispositif comprend en outre un clavier d'authentification de l'utilisateur par un code, le clavier coopérant avec le moyen de combinaison pour valider ou invalider la caractéristique biométrique déformée si le code est valide ou invalide respectivement.

Le dispositif selon l'invention comprend préférentiellement un moyen de communication avec l'élément requérant une authentification de l'utilisateur afin que l'élément requérant une authentification de l'utilisateur puisse modifier la constante.

Avantageusement, les moyens de combinaison appliquent une fonction non bijective à la caractéristique biométrique de l'utilisateur pour obtenir la caractéristique biométrique déformée de cet utilisateur.

Préférentiellement, le dispositif selon l'invention coopère avec l'élément requérant une authentification de l'utilisateur pour valider une authentification de l'utilisateur à l'aide de la caractéristique biométrique déformée si l'utilisateur entre un code valide dans l'élément requérant une authentification de l'utilisateur.

La présente invention sera mieux comprise à la lecture de la description suivante des figures annexées dans lesquelles :

- La figure 1 représente le principe de la présente invention ;
- La figure 2 représente un système mettant en oeuvre la présente invention ;
- La figure 3 représente une paire de lunettes mettant en oeuvre la présente invention.

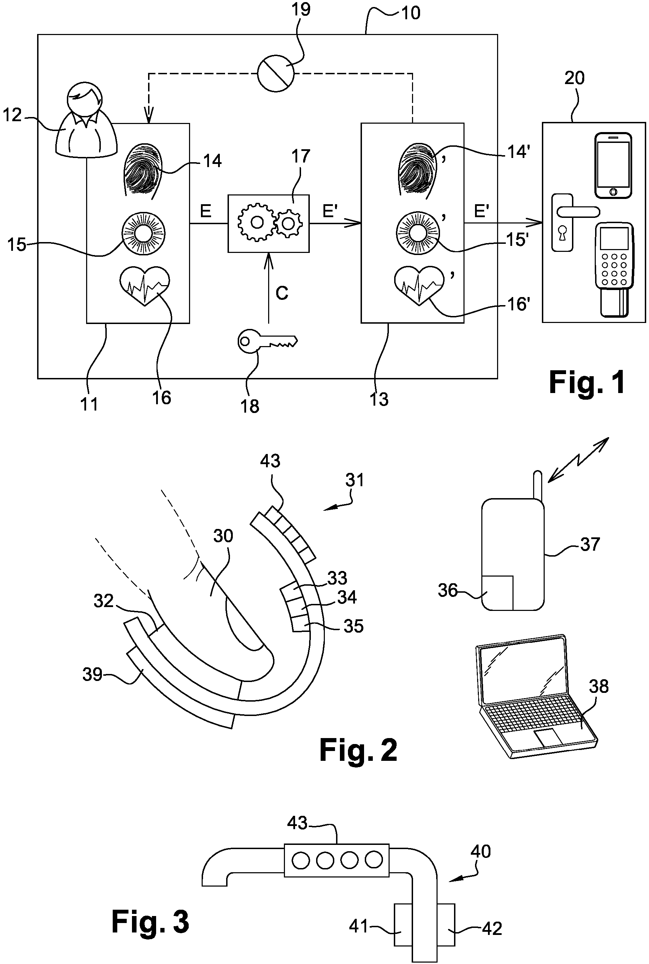

La figure 1 représente le principe de la présente invention.

Dans cette figure, un dispositif 10 selon la présente invention est représenté. Il a pour fonction de générer, à partir d'une caractéristique biométrique 11 d'un utilisateur 12 une caractéristique biométrique déformée 13 de cet utilisateur 12. Le dispositif 10 comprend à cet effet un capteur de la caractéristique biométrique 11 de l'utilisateur 12, par exemple (et de manière non limitative) un capteur d'une ou plusieurs empreintes digitales 14 de l'utilisateur 12, de ou de ses iris 15, et/ou de son électrocardiogramme 16.

Le dispositif 10 comprend un moyen de combinaison 17 de la caractéristique biométrique 11 de l'utilisateur 12 avec une constante, représentée sous la forme d'une clé 18. Le moyen de combinaison 17 est destiné à fournir une caractéristique biométrique déformée 13 de l'utilisateur 12, respectivement référencées 14', 15' et 16'. Ces caractéristiques déformées sont par exemple obtenues en appliquant la fonction F non bijective suivante à la caractéristique biométrique 11 :

$$E' = F(E,C)$$

Avec E' la caractéristique biométrique déformée de la caractéristique biométrique E et C la constante précitée.

La fonction F est non bijective de sorte que la connaissance de E' il ne soit pas possible d'en déduire E, comme représenté par la référence 19. La connaissance de E' par un attaquant ne lui permet donc pas de retrouver E (l'empreinte digitale 14 de l'utilisateur 12, de ou de ses iris 15, et/ou de son électrocardiogramme 16). Un exemple de fonction non bijective est par exemple un hash des données de E suivi d'un chiffrement ou alors l'inverse (chiffrement puis hash).

La caractéristique biométrique déformée 13 (E') est fournie à un moyen de comparaison de la caractéristique biométrique déformée avec une caractéristique biométrique de référence, cette caractéristique biométrique de référence étant obtenue, lors d'une phase préalable d'enregistrement, auprès d'un élément 20 requérant une authentification de l'utilisateur 12. A titre d'exemple, un smartphone, un portier électronique et un terminal de paiement sont représentés. Le smartphone peut par exemple requérir l'empreinte digitale déformée 14' de l'utilisateur 12 pour son déverrouillage ou pour valider une transaction bancaire (achat d'un bien), le portier électronique peut requérir une image de l'iris déformée 15' de l'utilisateur 12 pour déclencher l'ouverture d'une porte ou débloquer un accès et le terminal de paiement demander l'électrocardiogramme de l'utilisateur 12.

Le dispositif 10 comporte également des moyens de stockage de la constante C.

La figure 2 représente un système mettant en oeuvre la présente invention.

Dans cette figure, le dispositif de génération d'une caractéristique biométrique déformée de l'utilisateur 12 est constitué par un lecteur d'empreinte digitale portée au bout d'un doigt 30 de l'utilisateur 12. Le dispositif est référencé 31 et comporte un lecteur 32 de l'empreinte digitale de l'utilisateur 12. Le dispositif 31 est ici constitué par un dé (de la forme d'un dé à coudre par exemple) dans lequel l'utilisateur peut y glisser son doigt 30 et comprend un microprocesseur 33, une mémoire 34 et un bus I/O 35. La mémoire 34 est apte à stocker la constante C qui lui est transmise via le bus I/O (filaire ou non) par une application 36 comprise par exemple dans un terminal portable 37 ou dans un PC 38.

Le dispositif 31 comprend également un écran apte à afficher la caractéristique biométrique déformée de l'empreinte digitale.

Le fonctionnement de ce système est le suivant :

- lors d'une phase préalable d'enregistrement (« enrolment » en anglais) auprès d'un élément tel que 37 ou 38 requérant une authentification de l'utilisateur 12, cet utilisateur applique son doigt sur le lecteur 32 du dispositif 31 et positionne ce dernier sur un lecteur d'empreinte digitale coopérant avec l'élément 37 ou 38. L'application 36 présente dans l'élément génère alors une constante C qui est transmise à la mémoire 34 qui le stocke. L'empreinte digitale 14 lue par le lecteur 32 est alors transformée en une empreinte digitale déformée 14' (voir figure 1) qui est affichée sur l'écran 39. Cette empreinte digitale déformée 14' est alors stockée dans une mémoire de l'application 36 ou dans l'élément 37, 38 comme s'il s'agissait de la véritable empreinte digitale de l'utilisateur 12. Cette empreinte digitale déformée 14' constitue dès lors une empreinte biométrique de référence. Le terminal 37 ou 38 ne sait pas s'il s'agit de la véritable empreinte digitale de l'utilisateur 12 ou d'une empreinte digitale transformée.

- lors d'une phase ultérieure d'authentification, l'utilisateur applique à nouveau son doigt sur le lecteur 32 du dispositif 31 et repositionne ce dernier sur le lecteur d'empreinte digitale coopérant avec l'élément 37 ou 38. L'empreinte digitale déformée 14' qui est affichée sur l'écran 39 est alors comparée (par un moyen de comparaison) avec l'empreinte biométrique de référence. Si une correspondance est trouvée, l'authentification est positive. Dans le cas contraire, l'authentification est négative et il n'est pas donné droit à l'accès ou au paiement pour lequel une authentification de l'utilisateur 12 a été demandée par l'élément 37, 38 ou par une application distante (site Web, site bancaire,...).

La valeur C est révocable dans le dispositif selon l'invention : la caractéristique biométrique E' qui est présentée au lecteur biométrique de l'élément 37, 38 est une valeur traduite qui peut être révoquée à tout moment.

A cet effet, le dispositif selon l'invention comprend un moyen de communication (le module I/O 35) avec l'élément 37, 38 requérant une authentification de l'utilisateur 12 afin que l'élément 37, 38 requérant une authentification de l'utilisateur 12 puisse modifier la constante C.

Ainsi, si les valeurs traduites E' sont compromises, il est alors possible de les révoquer en :

- Révoquant la clé C du dispositif 10 et en produire un nouveau (localement ou avec l'utilisation d'un service Internet) ;
- Révoquant la caractéristique biométrique traduite E' dans le dispositif 37, 38 qui l'utilise.

Cette révocation peut être faite localement dans le dispositif 10 lui-même ou à l'aide d'un serveur distant.

A titre d'exemple d'utilisation d'un serveur distant, les téléphones portables sont aujourd'hui équipés de la fonction de suppression (« wipe » en anglais) à distance en cas de dispositifs perdus/volés. Il pourrait alors être possible de supprimer la clé C et son utilisation par le même mécanisme. Dans cet exemple, le dispositif 10 pourrait utiliser la connectivité du téléphone portable (Bluetooth, WiFi, OTA,...) ou pourrait engager son propre module de connectivité dans un ordinateur (module M2M par exemple).

Bien sûr, ceci est un exemple parmi d'autres comme il pourrait aussi être possible de révoquer et créer une nouvelle clé C localement en appuyant sur un bouton du dispositif 10.

En cas d'un dispositif selon l'invention perdu/volé :

- Si le dispositif biométrique 10 est volé ou perdu, un attaquant ne peut effectuer aucune action puisque la caractéristique biométrique humaine originale est manquante ;
- Si la caractéristique biométrique humaine E est compromise, il n'y a aucun problème puisque tous ses dispositifs ont été inscrits en utilisant la caractéristique biométrique traduite E' ;
- Si le dispositif biométrique 10 est volé et que la caractéristique de biométrie originale E est compromise, l'utilisateur 12 doit utiliser un nouveau dispositif (qui utilise une autre constante) et se réinscrire sur les systèmes différents 37, 38 (son téléphone portable, ses lecteurs d'accès physiques,...).

Le dispositif selon l'invention a donc une fonction de traduction d'une caractéristique biométrique de l'utilisateur 12 en une valeur révocable par l'utilisateur 12 en utilisant une constante C. Étant donné une constante C spécifique et une caractéristique biométrique E inchangée, la valeur traduite E' (caractéristique biométrique déformée) est toujours la même. Cette constante C est préférentiellement générée par le dispositif 10 lui-même ou par l'élément 37, 38 demandant une authentification lors de la première utilisation (phase préalable d'enregistrement) ou à tout moment quand la clé C doit être révoquée.

Une autre caractéristique clé du dispositif 10 selon l'invention est que l'opération ne peut pas être inversée. Il n'est alors pas possible de récupérer d'une valeur traduite E' la caractéristique biométrique originale E à laquelle elle correspond.

Un autre mode de réalisation de l'invention est représenté à la figure 3 qui représente une vue latérale d'une paire de lunettes 40 mettant en oeuvre la présente invention.

Dans ce mode de réalisation, le dispositif selon l'invention est constitué par une paire de lunettes 40 destinée à être portée par l'utilisateur 12.

La paire de lunettes 40 comporte un capteur optique 41 destiné à photographier ou filmer l'iris de l'utilisateur 12 ainsi que les moyens 33 à 35 non représentés de la figure 2. Ici, l'image photographiée ou filmée E de l'iris de l'utilisateur 12 est convertie en une caractéristique biométrique déformée E' correspondant en une image de l'iris déformée. Celle-ci est affichée sur un écran 42 qui peut être lu par un capteur optique (caméra) prévue sur un élément 37, 38.

Dans une variante, l'invention propose de rajouter un facteur supplémentaire d'identification par l'utilisation d'un code PIN. Ce code serait utilisé pour ouvrir la constante C et activerait la fonction de traduction du dispositif 10 selon l'invention. Dans cette variante, le niveau le plus haut de sécurité est atteint grâce à une authentification à trois facteurs avec :

- Quelque chose que l'utilisateur possède (le dispositif) ;
- Quelque chose que l'utilisateur connaît (le code PIN) ;
- Quelque chose que l'utilisateur est (sa caractéristique biométrique).

Cette variante est plus sécurisée, mais moins commode puisqu'elle nécessite l'entrée d'un code PIN. Il s'agit d'un compromis à trouver entre la sécurité et la commodité.

A cet effet, l'invention propose de rajouter, par exemple dans le dé 31 de la figure 2 ou dans les lunettes 40 de la figure 3 un clavier 43 ou une molette (du type utilisé sur des bagages) permettant à l'utilisateur d'entrer un code (par exemple un code PIN de 4 chiffres) sur son dispositif 31, 40.

Le dispositif 31, 40 selon l'invention comprend alors en outre un clavier 43 d'authentification de l'utilisateur 12 par un code, le clavier 43 coopérant avec le moyen de combinaison 17 pour valider ou invalider la caractéristique biométrique déformée E' si le code est valide ou invalide respectivement.

Deux alternatives sont donc possibles à ce niveau :

- Soit l'entrée du code conditionne la validité de E', c'est-à-dire que si le code n'est pas le bon, même si E' est correct, le dispositif 31, 40 ne va pas fournir E' à l'élément 37, 38 demandant une authentification ;

- Soit l'entrée du code ne conditionne pas la validité de E', c'est-à-dire que si le code n'est pas le bon, même si E' est incorrect, le dispositif 31, 40 ne va pas fournir E' à l'élément 37, 38 demandant une authentification. Ceci permet notamment à l'utilisateur 12 qui aurait des empreintes digitales abimées ou un problème de rétine de s'authentifier auprès de son dispositif 37, 38, même en l'absence de E' validé par son élément 37, 38 demandant une authentification.

Le facteur d'authentification supplémentaire (code PIN) peut également être saisi sur l'élément demandant l'authentification ou bien encore un autre dispositif de l'utilisateur (par exemple lunettes pour l'iris demandant au préalable de saisir un code sur le téléphone de l'utilisateur pour générer l'iris déformé qui est ensuite présenté à un lecteur d'authentification tiers).

Dans un mode de réalisation possible, le dispositif selon l'invention coopère avec l'élément requérant une authentification de l'utilisateur pour valider une authentification de l'utilisateur à l'aide de la caractéristique biométrique déformée si l'utilisateur entre un code valide dans l'élément requérant une authentification de l'utilisateur.

Les facteurs de forme pour ce dispositif peuvent être multiples. Des facteurs de forme possibles, mais non-exhaustifs, pourraient être :

- Un dispositif que les vêtements de l'utilisateur porte (dé à coudre, lentilles, lunettes), gant, capteur de battements cardiaques,...) ;
- Un dispositif qui est transparent pour l'utilisateur (film transparent placé sur le capteur d'empreinte digitale d'un téléphone portable par exemple). Ce dispositif peut alors être un dispositif explicite que l'utilisateur 12 doit gérer ou quelque chose de complètement transparent (l'utilisateur 12 ne sait pas même que ses caractéristiques biométriques ont été déformées).

L'avantage principal apporté par l'invention est de sécuriser des caractéristiques biométriques originales par un dispositif local sans le besoin de n'importe quelle intégration du côté du lecteur de l'élément requérant une authentification. La traduction est transparente pour le lecteur biométrique de l'élément.

De plus, l'invention permet de sécuriser des caractéristiques biométriques originales, assurer la vie privée de l'utilisateur 12 et fournir une entité éprouvée unique responsable pour authentifier l'utilisateur 12 basée sur sa caractéristique biométrique originale E.

**Revendications**

1. Dispositif (10, 31, 40) de génération d'une caractéristique biométrique déformée (E') d'un utilisateur (12), ledit dispositif (10, 31, 40) comprenant un capteur (32, 41) d'une caractéristique biométrique (E) dudit utilisateur (12), ledit dispositif (10, 31, 40) comprenant :

   - un moyen de combinaison (17) de ladite caractéristique biométrique (E) dudit utilisateur (12) avec une constante (C), ledit moyen de combinaison (17) étant destiné à fournir ladite caractéristique biométrique déformée (E') dudit utilisateur (12) à un moyen de comparaison de ladite caractéristique biométrique déformée (E') avec une caractéristique biométrique de référence, ladite caractéristique biométrique de référence étant obtenue lors d'une phase préalable d'enregistrement auprès d'un élément (20, 37, 38) requérant une authentification dudit utilisateur (12) ;
   - des moyens de stockage (34) de ladite constante (C).

2. Dispositif (10, 31, 40) selon la revendication 1, **caractérisé en ce que** ladite caractéristique biométrique déformée (E') est affichée sur un écran (39, 42) dudit dispositif (10, 31, 40).

3. Dispositif (10, 31) selon l'une des revendications 1 et 2, **caractérisé en ce qu'**il est constitué par un dé dans lequel ledit utilisateur (12) peut y glisser un doigt (30).

4. Dispositif (40) selon l'une des revendications 1 et 2, **caractérisé en ce qu'**il est constitué par une paire de lunettes (40) destinée à être portée par ledit utilisateur (12).

5. Dispositif (10, 31, 40) selon l'une des revendications 1 à 4, **caractérisé en ce qu'**il comprend en outre un clavier (43) d'authentification dudit utilisateur (12) par un code, ledit clavier (43) coopérant avec ledit moyen de combinaison (17) pour valider ou invalider ladite caractéristique biométrique déformée (E') si ledit code est valide ou invalide respectivement.

6. Dispositif (10, 40) selon l'une des revendications 1 à 5, **caractérisé en ce qu'**il comprend un moyen de communication (35) avec ledit élément (20, 37, 38) requérant une authentification dudit utilisateur (12) afin que ledit élément (20, 37, 38) requérant une authentification dudit utilisateur (12) puisse modifier ladite constante (C).

7. Dispositif (10, 40) selon l'une des revendications 1 à 6, **caractérisé en ce que** lesdits moyens de combinaison (17) appliquent une fonction non bijective à ladite caractéristique biométrique (E) dudit utilisateur (12) pour obtenir ladite caractéristique biométrique déformée (E') dudit utilisateur (12).

**8.** Dispositif (10, 40) selon l'une des revendications 1 à 4, **caractérisé en ce qu'**il coopère avec ledit élément (20, 37, 38) requérant une authentification dudit utilisateur (12) pour valider une authentification dudit utilisateur (12) à l'aide de ladite caractéristique biométrique déformée (E') si ledit utilisateur entre un code valide dans ledit élément (20, 37, 38) requérant une authentification dudit utilisateur (12).

**Fig. 1**

**Fig. 2**

**Fig. 3**

Europäisches
Patentamt

European
Patent Office

Office européen
des brevets

# RAPPORT DE RECHERCHE EUROPEENNE

Numéro de la demande

EP 15 30 7112

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHE JIN ET AL: "A Revocable Fingerprint Template for Security and Privacy Preserving", KSII TRANSACTIONS ON INTERNET AND INFORMATION SYSTEMS, 23 décembre 2010 (2010-12-23), XP055266370, ISSN: 1976-7277, DOI: 10.3837/tiis.2010.12.020 | 1 | INV. G06F21/32 H04L29/06 |
| Y | * abrégé * * Introduction, Sections 2, 3, 5; figure 1 * ----- | 2-8 | |
| X | ALPER KANAK ET AL: "Classification Based Revocable Biometric Identity Code Generation", 16 septembre 2009 (2009-09-16), BIOMETRIC ID MANAGEMENT AND MULTIMODAL COMMUNICATION, SPRINGER BERLIN HEIDELBERG, BERLIN, HEIDELBERG, PAGE(S) 276 - 284, XP019130835, ISBN: 978-3-642-04390-1 | 1 | |
| | | | DOMAINES TECHNIQUES RECHERCHES (IPC) |
| Y | * abrégé * * Introduction, Section 2; figure 1 * ----- | 2-8 | G06F H04L G06K |
| Y | WO 00/21020 A2 (COMSENSE TECHNOLOGIES LTD [IL]; ANTEBI AMIT [IL]; ATSMON ALON [IL]; LE) 13 avril 2000 (2000-04-13) * page 2 - page 3 * * page 9 - page 10 * * page 29 - pages 30, 51 * ----- | 2-8 | |

-/--

Le présent rapport a été établi pour toutes les revendications

| Lieu de la recherche | Date d'achèvement de la recherche | Examinateur |
|---|---|---|
| Munich | 20 avril 2016 | Ghani, Hamza |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 15 30 7112

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | BOULT T E ET AL: "Revocable fingerprint biotokens: accuracy and security analysis", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 17 juin 2007 (2007-06-17), pages 1-8, XP032070257, DOI: 10.1109/CVPR.2007.383110 ISBN: 978-1-4244-1179-5 * abrégé * * Introduction, Section 2 * ----- | 2-5 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 20 avril 2016 | Ghani, Hamza |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.....................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 30 7112

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2016

| Document brevet cité au rapport de recherche | Date de publication | Membre(s) de la famille de brevet(s) | Date de publication |
|---|---|---|---|
| WO 0021020 A2 | 13-04-2000 | EP 1116155 A2<br>JP 2002527012 A<br>WO 0021020 A2 | 18-07-2001<br>20-08-2002<br>13-04-2000 |

EPO FORM P0460

Pour tout renseignement concernant cette annexe : voir Journal Officiel de l'Office européen des brevets, No.12/82